Europäisches Patentamt

European Patent Office

Office européen des brevets

(11) Veröffentlichungsnummer: **0 499 934 A1**

# EUROPÄISCHE PATENTANMELDUNG

(21) Anmeldenummer: **92102188.7**

(22) Anmeldetag: **10.02.92**

(51) Int. Cl.⁵: **H01M 8/24**, H01M 8/12

(30) Priorität: **16.02.91 DE 4104840**

(43) Veröffentlichungstag der Anmeldung:
**26.08.92 Patentblatt 92/35**

(84) Benannte Vertragsstaaten:
**CH DE FR GB LI SE**

(71) Anmelder: **ABB PATENT GmbH**
**Kallstadter Strasse 1**
**W-6800 Mannheim 31(DE)**

(72) Erfinder: **Rohr, Franz-Josef, Dr.**
**Forstweg 2**
**W-6941 Abtsteinach(DE)**
Erfinder: **Stadelmann, Heinz, Dr.**
**Im Schilling 16**
**W-6906 Leimen(DE)**

(74) Vertreter: **Rupprecht, Klaus, Dipl.-Ing. et al**
**c/o ABB Patent GmbH, Postfach 10 03 51**
**W-6800 Mannheim 1(DE)**

(54) **Festelektrolyt-Brennstoffzellenanordnung.**

(57) Die Erfindung bezieht sich auf eine Brennstoffzellenanordnung (1), bei der auf einem keramischen Träger (2) mehrere Brennstoffzellen mit Festelektrolyten angeordnet sind. Die Brennstoffzellen sind mittels eines Klebers (5) und einem Sinterprozeß mit dem Träger (2) verbunden und zwischen den Zellen besteht eine mit Interkonnektmaterial (3) hergestellte elektrische Verbindung zur Serien- oder Parallelschaltung. Da die Brennstoffzellen sowohl den Kleber wie das Interkonnektmaterial überdecken, kann es durch unterschiedliche Schrumpfung während des Sinterprozesses zu unbefriedigender Haftung und Kontaktierung kommen. Die Erfindung schafft Abhilfe durch Verwendung eines einheitlichen Werkstoffs für die Klebefunktion und die Funktion als elektrischer Verbindungsleiter. Die Brennstoffzellenanordnung kann in Hochtemperatur-Brennstoffzellenbatterien angewendet werden.

Fig.1

Die Erfindung bezieht sich auf eine Brennstoffzellenanordnung mit einem keramischen Träger, auf dem mehrere Brennstoffzellen, die eine Anode, einen Festelektrolyten und eine Kathode aufweisen, nebeneinander angeordnet sind, und wobei elektrische Verbindungen zwischen den Brennstoffzellen zur Herstellung einer Serien- oder Parallelschaltung der Brennstoffzellen mittels eines Interkonnektmaterials hergestellt sind.

Eine solche Brennstoffzellenanordnung ist aus der DE-OS 39 07 485 bekannt. Dieser Druckschrift sind Einzelheiten zum Aufbau und zur Arbeitsweise einer Brennstoffzellen-Batterie zu entnehmen, die Brennstoffzellenanordnungen mit Gruppen von in Serie oder parallel geschalteten Brennstoffzellen enthält. In einer solchen Brennstoffzellen-Batterie wird den Kathoden der Brennstoffzellen ein sauerstoffhaltiges Gas, z.B. Luft, zugeleitet und an den Außenflächen der Anoden der Brennstoffzellen wird ein gasförmiger oder vergaster Brennstoff vorbeigeleitet. Der zum Aufbau der Brennstoffzellenanordnung benutzte Träger ist eine Grundplatte, auf der Brennstoffzellen nebeneinander angeordnet und elektrisch miteinander verbunden sind. Der Träger muß aber auch den Zugang der Luft zur Kathode der Brennstoffzelle ermöglichen. In der DE-OS 39 07 485 sind zu diesem Zweck plattenförmige keramische Träger vorgesehen, die im Inneren Hohlräume zur Luftführung aufweisen. Der Zutritt von Luft vom Luftkanal durch die Wand des Trägers zu den Kathoden der Brennstoffzellen ist dadurch ermögllcht, daß der Träger aus porösem Material hergestellt und somit gasdurchlässig ausgeführt ist. Andererseits muß die aus Träger und Brennstoffzelle bestehende Brennstoffzellenanordnung einen direkten Kontakt der Luft mit dem Brennstoff unterbinden, also an mehreren Stellen mit geeigneten Schichten abgedichtet werden.

Der gasdurchlässige keramische Träger der bekannten Brennstoffzellenanordnung wird vorzugsweise durch Extrusion hergestellt, wobei der Extrusionsmasse nicht handelsübliche Porenbildner zugesetzt werden, um die erforderliche Gasdurchlässigkeit zu erreichen. Allerdings beeinträchtigt dieser Zusatz die Extrusion und außerdem ist die mechanische Festigkeit sowohl des Grünkörpers als auch des gesinterten Trägers relativ gering. Nicht von Brennstoffzellen bedeckte Flächen des Trägers, wie z.B. Stirnseiten des Trägers, müssen abgedichtet werden, wobei sich das Abdichten poröser Strukturen als schwierig erwiesen hat. Außerdem erfordert die bekannte Anordnung, daß die in der genannten Druckschrift mit Bezugszeichen 14 versehenen elektrisch leitenden Schichten zur elektrischen Verbindung von Brennstoffzellen aus gasdichtem Material hergestellt werden.

Bei der aus der DE-OS 39 07 485 bekannten Anordnung werden die Brennstoffzellen bildenden Schichten, also für Kathoden, Festelektrolyten und Anoden sowie die zur elektrischen Verschaltung erforderlichen elektrisch leitenden Schichten und Isolierschichten nacheinander durch Masken und Sinterprozesse aufgebracht. Gemäß der nicht vorveröffentlichten deutschen Patentanmeldung P 40 11 506.2 können die einzelnen Brennstoffzellen aber auch als vorgefertigte Komponenten hergestellt und auf den Träger aufgeklebt werden. Sowohl die aus der DE-OS 39 07 485 bekannte Anordnung wie auch die in der Anmeldung P 40 11 506.2 angegebene Anordnung enthalten einen porösen Träger. Das sauerstoffhaltige Gas, z.B. Luft, wird in Hohlräumen innerhalb des plattenförmigen Trägers geführt und gelangt durch die Poren des Trägers zur Kathode der Brennstoffzellen.

Das sauerstoffhaltige Gas muß nicht nur durch die Wand des Trägers, sondern auch durch den Kleber zur Kathode geführt werden. In der Anmeldung P 40 11 506.2 ist als Kleber eine poröse Schicht aus einem elektrisch leitenden Perowskitmischoxid angegeben. Der elektrisch leitende Kleber soll die Querleitfähigkeit der Kathode unterstützen.

Zur Herstellung elektrischer Verbindungen zwischen den einzelnen Brennstoffzellen ist in der Anmeldung P 40 11 506.2 ein anderes Material, nämlich eine Kombination aus einer Schicht eines gasdichten elektrisch leitenden Materials in Form eines Perowskitmischoxids, z.B. aus Strontium dotiertem Lanthanchromit und einer zusätzlichen Schicht aus Nickel-Zirkoniumoxid bzw. Nickel, die zur Verbesserung der elektrischen Leitfähigkeit dient, vorgesehen.

Die verschiedenen Materialien zur Herstellung der Klebeschicht und zur Herstellung von Leiterbahnen werden in getrennten Verfahrensschritten strukturiert auf den Träger aufgebracht.

Es hat sich gezeigt, daß dieses Konzept zu unbefriedigenden Ergebnissen bezüglich Haftung und elektrischer Kontaktierung führen kann. Da die Brennstoffzelle sowohl den Kleber als auch einen Teil der Leiterbahnen überdeckt, kann es zu einem in Figur 4 dargestellten Problem, nämlich zu einem nicht ganzflächigen Kontakt zwischen Brennstoffzelle und Träger kommen. Die Ursache kann in unterschiedlich dick aufgebrachten Schichten, aber vor allem in einer unterschiedlichen Schrumpfung der Schichten während des Sinterprozesses, mit welchem die Brennstoffzellen mit dem Träger verbunden werden, liegen.

Ausgehend von dem aus der DE-OS 39 07 485 bekannten Stand der Technik liegt der Erfindung die Aufgabe zugrunde, eine rationell herstellbare Brennstoffzellenanordnung anzugeben, die eine gute mechanische Verbindung zwischen Brennstoffzellen und Träger sicherstellt und außerdem den elektrischen Anforderungen genügt.

Diese Aufgabe wird gelöst durch eine Brennstoffzellenanordnung mit einem keramischen Träger, auf dem mehrere Brennstoffzellen, die eine Anode, einen Festelektrolyten und eine Kathode aufweisen, nebeneinander angeordnet sind, und wobei elektrische Verbindungen zwischen den Brennstoffzellen zur Herstellung einer Serien- oder Parallelschaltung der Brennstoffzellen mittels eines Interkonnektmaterials hergestellt sind, wobei

a) der keramische Träger gasdicht ausgeführt ist, mit Ausnahme seiner Wandbereiche, die von Brennstoffzellen bedeckt sind und gasdurchlässig ausgeführt sind,

b) die Brennstoffzellen als vorgefertigte Komponenten mittels eines Klebers und einem Sinterprozeß dauerhaft mit dem Träger verbunden sind und

c) ein elektrisch leitendes Oxid sowohl als Kleber wie auch als Interkonnektmaterial eingesetzt ist.

Mit der Erfindung wird also vorgeschlagen, vorgefertigte Brennstoffzellen auf den Träger zu montieren und anstelle eines porösen Trägers einen gasdichten Träger vorzusehen, wodurch sich die Abdichtungsprobleme wesentlich vereinfachen. Insbesondere braucht bei diesem Konzept das Interkonnektmaterial zur Herstellung elektrischer Verbindungen zwischen den Brennstoffzellen nicht gasdicht zu sein. Weiterhin wird vorgeschlagen als Kleber und Interkonnektmaterial ein einheitliches Material vorzusehen, das als einheitliche Schicht auf den Träger aufgebracht werden kann. Damit ist ein unterschiedliches Schrumpfungsverhalten sicher vermieden. Außerdem hat die erfindungsgemäße Lösung den Vorteil, daß insgesamt weniger Fertigungsschritte benötigt werden, beispielsweise entfällt ein Siebdrucken von Interkonnektmaterial.

Die Erfindung wird nachstehend anhand der Zeichnung näher erläutert.

Es zeigen:

Figur 1    Brennstoffzellenanordnung mit einem Kleber aus Kathodenmaterial,

Figur 2    Brennstoffzellenanordnung mit einem Kleber aus einem $NiO/ZrO_2$-Mischoxid,

Figur 3    Brennstoffzellenanordnung mit strukturiertem Kleber und einer Randabdichtung mit Glas,

Figur 4    Brennstoffzellenanordnung mit unterschiedlichem Kleber und Interkonnektmaterial entsprechend dem Stand der Technik.

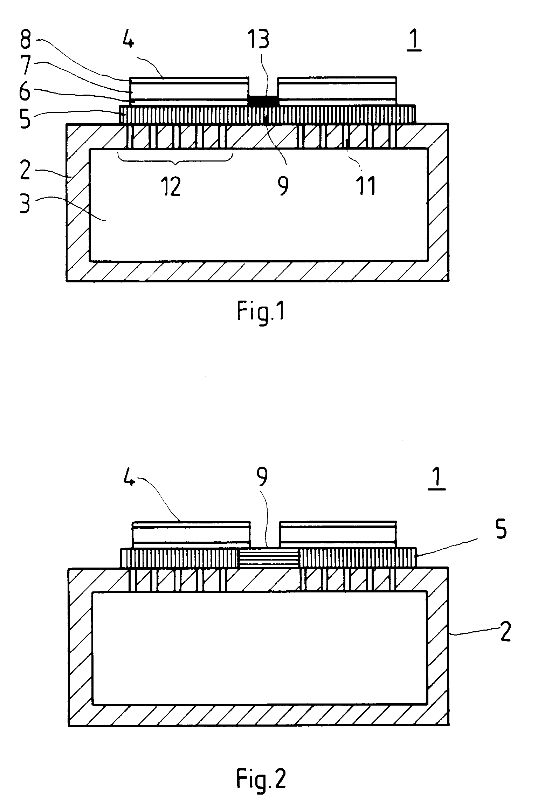

Figur 1 zeigt in schematischer Darstellung einen Schnitt durch eine Brennstoffzellenanordnung 1, mit einem gasdichten Träger 2, der mit Hohlräumen 3 zur Luftführung versehen ist. Mit Hilfe eines Klebers 5 sind auf dem Träger 2 zwei Brennstoffzellen 4 montiert, die kathodenseitig über die Kleberschicht 5 parallelgeschaltet sind. Die Brennstoffzellen 4 sind vorgefertigte Komponenten und enthalten eine Kathode 6, einen Festelektrolyten 7 und eine Anode 8. Der Kleber 5 ist elektrisch leitend und besteht aus dem gleichen Material wie die Kathode 6, z.B. $La_xA_{(1-x)}BO_3$; mit A = Ca, Sr und B = Übergangsmetall. In einem mit Bezugszeichen 9 versehenen Bereich zwischen den Brennstoffzellen 4 wirkt der Kleber 5 als Interkonnektmaterial, also als elektrischer Verbindungsleiter, der auch mit Interkonnektor bezeichnet wird. Da die elektrische Leitfähigkeit des aus Kathodenmaterial bestehenden Klebers 5 für die Funktion als Verbindungsleiter unzureichend sein kann, ist dem Bereich 9 eine zusätzliche Beschichtung 13 mit einem metallischen Leiter, z.B. Nickel, aufgebracht. Die metallische Beschichtung 13 wirkt gleichzeitig als zusätzliche Dichtung.

Der Figur 1 ist außerdem zu entnehmen, daß der an sich gasdichte Träger 2 in Wandbereichen 12, die von Brennstoffzellen 4 bedeckt sind, gasdurchlässig ausgeführt ist, nämlich durch Anordnung von Kanälen 11, die eine Zufuhr von Luft zu den Kathoden 6 ermöglichen.

Figur 2 zeigt ebenfalls eine Anordnung von Brennstoffzellen 4 auf einem Träger 2, wobei als Kleber 5 ein $NiO/ZrO_2$-Mischoxid verwendet ist. In diesem Fall ist in dem als Verbindungsleiter wirkenden Bereich 9 keine zusätzliche Beschichtung erforderlich, weil beim Betrieb der Brennstoffzellenanordnung der mit dem Brennstoff in Kontakt kommende Teil des Klebers 5, also der Bereich 9, automatisch zu elementarem Nickel reduziert, wodurch die gewünschte Leitfähigkeit erreicht ist.

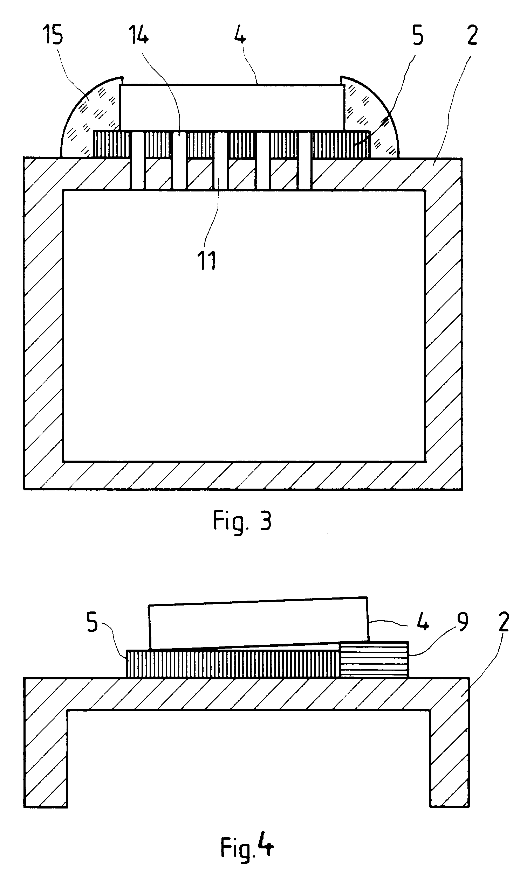

Der Kleber 5 kann nach unterschiedlichen Gesichtspunkten gewählt und optimiert werden. Beispielsweise kann ein poröser Kleber gewählt werden, womit eine in den Figuren 1 und 2 dargestellte lückenlose Kleberschicht verwendbar ist. Wenn die Kathode 6 aus einer dünnen durch Siebdurck aufgebrachten Schicht besteht, kann zur Verbesserung der Leitfähigkeit ein annähernd gasdichter Kleber 5 benutzt werden, der eine höhere Leitfähigkeit als die poröse Kathode 6 hat. In diesem Fall kann zur Verbesserung des Gasduchtritts durch den Kleber 5 dieser durch Siebdruck aufgetragen werden, wobei so strukturiert wird, daß die Kanäle 11 im Träger 2 nicht mit Klebermaterial überdeckt werden. Eine solche Anordnung mit Öffnungen 14 im Kleber 5 ist in Figur 3 dargestellt.

In Figur 3 ist außerdem eine zusätzliche Andichtungsmöglichkeit mit einem Glas 15, z.B. einem Glas der Serie A der Fa. Schott, das am Rand der Brennstoffzellen 4 aufgetragen ist, dargestellt. Bei Verwendung eines Klebers 5, dessen Dichte über 90% der theoretischen Dichte liegt, kann auch ohne Glas eine ausreichende Gasdichtigkeit erreicht werden.

**Patentansprüche**

1. Brennstoffzellenanordnung mit einem keramischen Träger, auf dem mehrere Brennstoffzellen, die eine Anode, einen Festelektrolyten und eine Kathode aufweisen, nebeneinander angeordnet sind, und wobei elektrische Verbindungen zwischen den Brennstoffzellen zur Herstellung einer Serien- oder Parallelschaltung der Brennstoffzellen mittels eines Interkonnektmaterials hergestellt sind, dadurch gekennzeichnet, daß

a) der keramische Träger (2) gasdicht ausgeführt ist, mit Ausnahme seiner Wandbereiche (12), die von Brennstoffzellen (4) bedeckt sind und gasdurchlässig ausgeführt sind,

b) die Brennstoffzellen (4) als vorgefertigte Komponenten mittels eines Klebers (5) und einem Sinterprozeß dauerhaft mit dem Träger (2) verbunden sind und

c) ein elektrisch leitendes Oxid sowohl als Kleber (5) wie auch als Interkonnektmaterial (9) eingesetzt ist.

2. Brennstoffzellenanordnung nach Anspruch 1, dadurch gekennzeichnet, daß der Kleber (5) aus dem Material der Kathoden (6) der Brennstoffzellen (4), z.B. $La_xA_{(1-x)}BO_3$; mit A = Ca, Sr und B = Übergangsmetall, besteht.

3. Brennstoffzellenanordnung nach Anspruch 1, dadurch gekennzeichnet, daß der Kleber (5) aus einem $NiO/ZrO_2$-Mischoxid bzw. aus $Ni/ZrO_2$ besteht.

4. Brennstoffzellenanordnung nach einem der vorstehenden Ansprüche, dadurch gekennzeichnet, daß auf den Träger (2) eine einheitlich dicke Schicht des sowohl als Kleber (5) wie auch als Interkonnektmaterial (9) dienenden Materials aufgetragen ist.

5. Brennstoffzellenanordnung nach Anspruch 2, dadurch gekennzeichnet, daß die aus Kathodenmaterial bestehende Schicht in ihrem als Interkonnektor (9) wirkenden Bereich, der nicht von Brennstoffzellen (4) bedeckt ist, mit einer zusätzlichen Beschichtung (13) mit einem metallischen Leiter, z.B. Nickel, versehen ist.

6. Brennstoffzellenanordnung nach einem der vorstehenden Ansprüche, dadurch gekennzeichnet, daß bei Verwendung eines Klebers (5) mit geringer Gasdurchlässigkeit der Kleber (5) z.B. mittels einem Siebdruckverfahren in solcher Weise strukturiert auf dem Träger (2) aufgebracht ist, daß eine Überdeckung der Kanäle (11) mit Klebermaterial vermieden ist.

7. Brennstoffzellenanordnung nach einem der vorstehenden Ansprüche, dadurch gekennzeichnet, daß zur Verbesserung der Gasdichtigkeit die Brennstoffzellen (4) an ihrem äußeren Rand durch eine Glasschicht (15) abgedeckt sind.

Fig.1

Fig.2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | OE-A-4 033 284 (ASEA BROWN BOVERI AG)<br>* Seite 3, Zeile 50 - Zeile 56 *<br>* Seite 3, Zeile 62 - Zeile 66; Abbildung 8 *<br>--- | | H01M8/24<br>H01M8/12 |
| A | US-A-3 525 646 (H. TANNENBERGER ET ALL)<br>* Spalte 3, Zeile 10 - Zeile 48; Abbildung 1 *<br>* Ansprüche 5,6 *<br>--- | | |
| P,A | EP-A-0 454 095 (YOSHIDA KOGYO K.K.)<br>* Spalte 5, Zeile 37 - Spalte 6, Zeile 28; Abbildungen 6-10 *<br>--- | 1 | |
| D,P, A | EP-A-0 452 737 (ABB PATENT GMBH)<br><br>* Zusammenfassung; Anspruch 10 *<br>--- | | |
| D,A | EP-A-0 387 643 (ASEA BROWN BOVERI)<br><br>----- | | |

| | RECHERCHIERTE SACHGEBIETE (Int. Cl.5 ) |
|---|---|
| | H01M<br>G01N |

Der vorliegende Recherchenbericht wurde für alle Patentansprüche erstellt

| Recherchenort | Abschlußdatum der Recherche | Prüfer |
|---|---|---|
| DEN HAAG | 27 MAI 1992 | D'HONDT J.W. |